# EUROPEAN PATENT SPECIFICATION

(11) **EP 4 011 803 B1**
(45) Date of publication and mention of the grant of the patent: **06.03.2024**
(21) Application number: 20383164.9
(22) Date of filing: 28.12.2020
(51) Int. Cl.: B65D 85/804, B65D 65/46

(54) **SINGLE-DOSE CAPSULE FOR ESPRESSO COFFEE MACHINES**
EINZELDOSISKAPSEL FÜR ESPRESSO-KAFFEEMASCHINEN
CAPSULE MONODOSE POUR MACHINES À EXPRESSO

(30) Priority: 14.12.2020 ES 202032673 U
(43) Date of publication of application: 15.06.2022
(73) Proprietor: Industria de Cafe del Norte, S.A., 01013 Vitoria-Gasteiz (Álava) (ES)
(72) Inventor: LIZARDUY DORRONSORO, Ainhoa, 01013 VITORIA-GASTEIZ (ÁLAVA) (ES)
(74) Representative: Herrero & Asociados, S.L.

(56) References cited:
- WO-A1-2019/150205
- ES-A1- 2 234 445
- ES-T3- 2 552 581
- US-A1- 2006 019 000
- US-A1- 2007 148 290
- US-A1- 2014 053 735

## Description

### TECHNICAL FIELD OF THE INVENTION

The present invention, as expressed in the heading of the present description, refers to a single-dose capsule for the preparation of beverages.

More specifically, the capsule of the invention is of the type that can be used in espresso-type coffee machines in which the preparation of coffee requires perforating the base of the capsule to allow the passage of pressurized hot water inside it.

### BACKGROUND OF THE INVENTION

Currently, capsules made of deep-drawn aluminum and hermetically closed at their base by a closing sheet also made of aluminum or some other appropriate material are known for the preparation of espresso coffee, which guarantee that the product contained in the capsule does not lose its organoleptic properties during transport and storage.

More specifically, document EP1190959 shows a capsule with a frusto-conical bottom that must be perforated so that the pressurized hot liquid penetrates inside the capsule and is distributed, for which the machine has several perforating tips. The open base of the capsule, closed by means of a thermo-sealed closing sheet throughout its periphery, is coupled to the machine, which has second perforating means for the exit of the prepared drink that also passes through filtering means included by said machine.

As described in document EP1190959, this type of capsule has a layer of fabric preferably made of polyurethane, which is located at the bottom of the capsule and whose objectives are, on the one hand, given the flexibility of polyurethane, to prevent the perforating means from coming into contact with the contents of the capsule and, on the other hand, constitute a non-return barrier of coffee residues, which in practice is not always achieved since the perforating tips sometimes also penetrate the thin layer of polyurethane and they come into contact with the ground coffee in the capsule, thereby losing the cleaning conditions of the extraction system.

Likewise, capsules made of injected plastic have come onto the market, which can be used in the type of machines described above. These frusto-conical shaped capsules have a first larger open base, which is tightly sealed by means of a closing sheet, and lack the conical extension typical of deep drawn aluminum capsules, which must be perforated to allow the distribution liquid to pass through it, so they are somewhat shorter. Likewise, they comprise a second smaller base with multiple perforations for the passage of the distribution liquid, without the need for said base to be perforated by the perforating tips of the machine.

The previous capsule is not hermetic since, as indicated, its lower base is perforated, which requires that for its storage and transport it is necessary to insert it in an envelope or vacuum packaging sleeve that prevents the exit of ground coffee, so that the capsule is removed from its packaging right at the time of use. The use of these capsules requires a more complex packaging system and a particular presentation and casing, very different from that of deep-drawn aluminum capsules.

In the Spanish Patent ES2552581, validation of European Patent EP2650234, a last coffee capsule is shown that solves the problem described above. Said capsule dispenses with the use of a vacuum sleeve thanks to the incorporation of a second closing sheet that is sealed on the smaller perforated base and that allows the capsule assembly to be hermetically sealed.

This second sealing sheet is removable, so that it can optionally be eliminated at the time it is introduced into the machine, depending on the type of machine to which the capsule is applied, said sheet is removed or not removed. In certain types of machines, said sealing sheet is not removed and the entire hermetic capsule is inserted into the coffee machine.

Additionally, the capsule has in its interior a plurality of vertical ribs that originate from its smaller base and comprise a free end adjacent to the body of the capsule, the purpose of which is to act as a stop to prevent the capsules from getting stuck together when stacked.

In the last cited document, both the capsule and the sealing sheet are preferably made of materials such as aluminum or plastic, more specifically with thermoplastics derived from propylene such as RPC, from its English name Polypropylene Random Copolymer, which are suitable for coming into contact with food substances and that also have certain rigidity.

However, with the aim of reducing the consumption of plastic and aluminum that is not normally recycled in the appropriate container after using the capsule since there are organic coffee residues inside, new sustainable materials have been developed for the formation of coffee capsules. Among them, various compostable materials can be highlighted, that is, biodegradable compounds that would reduce the environmental impact once the capsule is discarded.

Specifically, the use of biodegradable plastics has been spread, such as polylactic acid (PLA), polyhydroxyalkanoates (PHA), thermoplastic starches (TPS), polycaprolactone (PCL), polybutylene succinate (PBS) or polybutylene adipate / terephthalate (PBAT), among others.

For example, if a coffee capsule of the type presented in patent ES2552581 is formed with this type of biodegradable materials, the problem results in the fact that, due to the composition of the closing sheet of the smaller base, there is a risk that this remains adhered to the holes in the perforated base due to the effect of the pressure exerted by the water when it passes through the capsule for the preparation of coffee, thus causing the holes to block and preventing the passage of water. A single-use coffee capsule with a solution to this problem is disclosed in WO2019/150205A1 (European Patent EP3746375 B1).

This phenomenon may or may not occur depending on whether or not an incorrect temperature is applied during the production process, which would lead to a delamination of the cellulose material that makes up the closing sheet of the smaller base.

Likewise, another problem found is that the vertical ribs prevent the body of the capsule from acquiring a curved exterior shape, which in turn prevents the capsule from being able to adapt perfectly to the shape of the interior of the coffee machine where it is inserted, thus producing rear leaks due to the accumulation of water in the gaps between the machine and the capsule.

### DESCRIPTION OF THE INVENTION

The coffee capsule of the present invention solves the problems of the aforementioned state of the art since it provides a single-dose capsule, capable of being formed with biodegradable materials, which comprises in its perforated base a support ring for the sealing sheet that prevents the possible clogging of the water passage holes.

More specifically, the single-dose coffee capsule of the invention has a generally curved frusto-conical shape and comprises a larger open base, provided with a wide flat surface flange that is closed with a closing sheet once the capsule is loaded with the product to be contained, as well as a second smaller perforated base on which a second fixed sealing sheet is placed to hermetically close the assembly.

The frusto-conical body of the capsule is preferably made of an odorless plastic suitable for food, biodegradable in an industrial composting plant and with excellent mechanical properties as well as a high heat deformation temperature. On the other hand, the sealing sheet could be made of cellulose with laminated polylactic acid (PLA).

However, the single-dose capsule solution proposed in the present invention could be used indistinctly in non-biodegradable classic capsules, as well as in those made with compostable materials other than the aforementioned.

The bottom of the capsule comprises a perimeter support foot and a central area provided with multiple perforations, uniformly distributed. Said central area is sunken or recessed towards the inside of the capsule, so that a hollow space is established between the central perforated area and the support plane of the capsule, with a sufficient height to prevent the machine's perforating means from penetrating inside the capsule, thus maintaining full cleaning conditions.

As with other capsules, the distribution begins with the entry of pressurized hot water that penetrates the capsule through the holes in the lower base or bottom, once the sealing sheet has been perforated by means existing in the machine to allow its introduction. The water evenly passes through the ground coffee mass and the infusion leaves towards the cup through the closing sheet of the larger base, for which said lid is also perforated by means existing in the machine, which can additionally provide the filtering means so that the infusion reaches the cup free of solid coffee residues.

The perforated central area serves a dual purpose. On the one hand, when the capsule is used in machines with perforating means in the lower base or bottom, it does not require such perforation, since the capsule itself has perforations for the passage of hot liquid under pressure into the capsule and, on the other hand, the plurality of evenly distributed holes makes the distribution more homogeneous.

Furthermore, the capsule of the present invention can be used indistinctly in machines of the type described, that is, in machines that have means of perforating the base for the passage of the distribution liquid, and in machines that lack a filter, that is, in machines in which the filter must be established in the capsule itself. In the latter case, the perforated base of the capsule acts as a filter.

In the central area of the perforated base, a support ring is formed, which consists of a circumferential step that rises to a height such that it is located slightly below the support plane of the capsule, or what is the same, the plane comprising the sealing sheet. Said step acts as a stop so that, once the sealing sheet is perforated, the sheet does not adhere to the base due to the pressure effect exerted by the water when it passes through the capsule, which would block the holes for the passage of the liquid.

On the other hand, the flange present in the open base of the capsule substantially fulfills two objectives. First, it is a wide base for the adherence of the closing sheet onto it, which allows the capsule to be heat sealed. Likewise, it provides optimum flexibility for the tight coupling between the machine and the capsule at the time of distribution.

From the bottom or smaller base of the capsule some vertical internal ribs are originated, which extend approximately to the middle of the capsule, the purpose of which is to prevent the capsules from stacking each other when they are moved by the centrifugal feeder that is in charge of directing them towards the loading area.

Contrary to what happened with the vertical ribs of the state of the art, the ribs of the present capsule comprise a groove at their free end. In this way, a movement of the body-rib junction occurs towards an area closer to the smaller base, thus allowing the curvature or circularity of the capsule body in said junction area not to be altered, all without losing the height of the free end necessary to act as a stop and prevent one capsule from remaining fitted into the other.

This curved shape of the body ultimately allows the capsule to adapt perfectly to the shape of the interior of the coffee machine where it will be inserted, being also curved, reducing the space that would occur between both bodies if the outer surface of the capsule included straight and not curved sections, thus avoiding accumulations of water that become rear leaks.

### DESCRIPTION OF THE DRAWINGS

To complete the description that is being made and in order to help a better understanding of the features of the invention, according to a preferred example of a practical embodiment thereof, a set of drawings is attached as an integral part of said description. For illustrative and non-limiting purposes, the following has been represented:
Figure 1.- Shows a perspective view of the exterior of the capsule object of the invention.
Figure 2.- Shows a perspective view of the interior of the capsule object of the invention
Figure 3.- Shows a longitudinal section view of the capsule of Figures 1 and 2.
Figure 4.- Shows in detail a section of the flat surface flange of the larger base of the capsule of Figure 3.
Figure 5.- Shows in detail a section of the support foot of the lower base or bottom of the capsule of Figure 3.
Figure 6.- Shows a top plan view of the capsule of the present invention.

### PREFERRED EMBODIMENT OF THE INVENTION

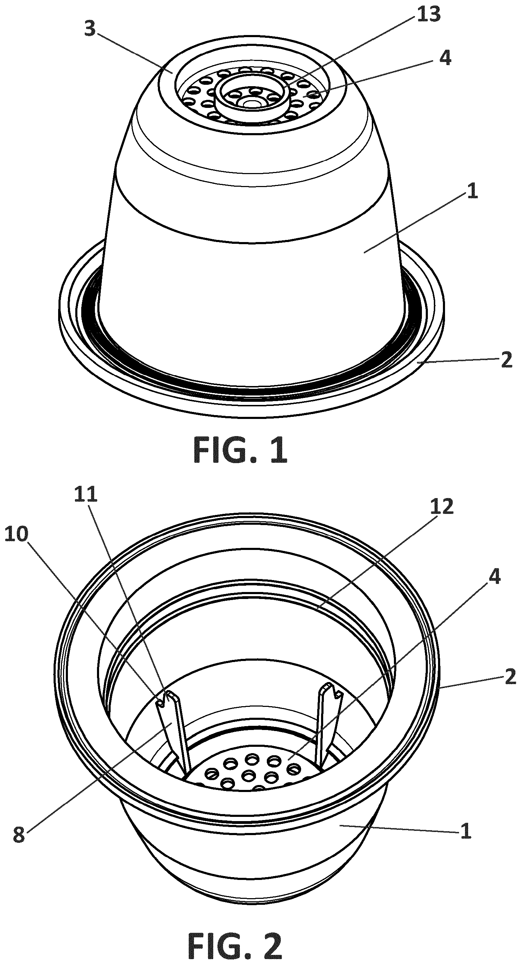

Figure 1 shows a preferred embodiment of the capsule of the present invention, which comprises a body (1) with a generally curved frusto-conical shape, a larger open base provided with a wide flat surface flange (2) and a smaller base or closed bottom.

The smaller base comprises a perimeter support foot (3) and a central area (4), sunken or recessed into the interior of the capsule, which contains multiple perforations uniformly distributed, so that a hollow (9) is established between the support plane of the capsule and the central area (4). This hollow (9) is hermetically closed with a sealing sheet (6).

Preferably, the outer shape of the frusto-conical body (1) of the capsule adapts to the shape of the interior of the coffee machine where it will be inserted, thus reducing the gap between the two to avoid accumulations of water that become rear leaks.

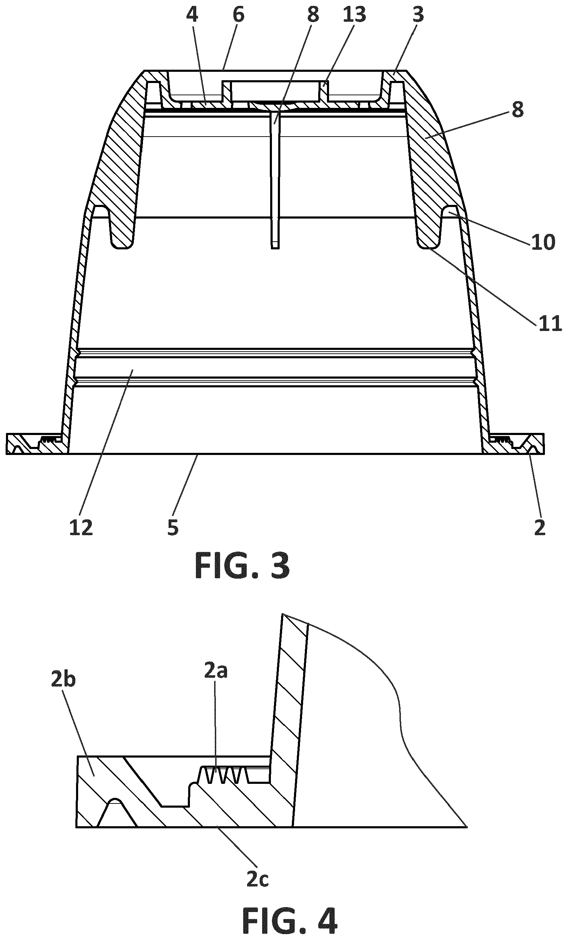

For example, for a housing with curved walls, the outer wall of the capsule of the present invention can comprise three areas with different curvature, as can be seen in Figure 3, a first from the larger base to the area where the vertical ribs (8) comprise a groove (10), a second that extends from said groove (10) to the perforated central area (4), and a third one that runs from the perforated central area (4) to the perimeter support foot (3).

Likewise, the height of the capsule will be enough to guarantee puncture and quality after dispensing, such as a height between 26.1 and 26.2 mm. On the other hand, the diameter of the capsule can be increased to 29.15 mm in order to ensure that the tread of the capsule when stacked on the vertical ribs (8) remains centered.

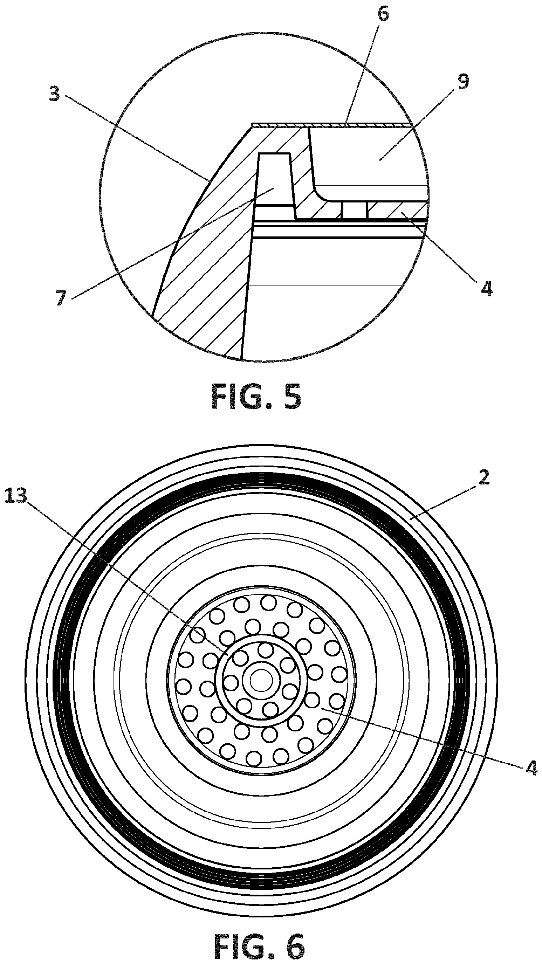

In the smaller base of the capsule, as shown in the detail of figure 5, an internal hollow area (7) is formed between the central area (4) and the perimeter support foot (3), which can be also used as a useful space for loading the capsule with coffee. Once the interior of the capsule has been loaded with ground coffee or another food substance such as tea or cocoa, the smaller base is closed with a sealing sheet (6) that remains adhered to the perimeter support foot (3).

Once the interior of the capsule is loaded with ground coffee, which is inserted from the opening that defines the larger base, the capsule is closed by means of a closing sheet (5) that remains adhered on the flat flange (2) of the larger base. Both closing (5) and sealing (6) sheets produce the hermetic closure of the capsule necessary for the preservation of the product contained therein so that it does not lose its organoleptic characteristics during transport and storage of the capsule.

As shown in figure 6, a support ring is formed on the perforated base that acts as a stop so that the sealing sheet (6) does not adhere to the holes for the passage of water due to the pressure generated over the hollow (9) once the machine perforates the sealing sheet (6) and the pressurized water is introduced. Said support ring comprises a circumferential step (13) that rises to a height such that it is located slightly below the support plane of the capsule, or what is the same, the plane that comprises the sealing sheet (6).

Preferably, the circumferential step (13) will have a radius equal to half the radius that delimits the perimeter of the perforated central area (4) and will be concentric to it, so that it covers the fewest possible holes.

Additionally, the body (1) of the capsule comprises inside a plurality of vertical ribs (8), shown in figure 2, which prevent the capsules from stacking one another in the anarchic movement in the feeder of the filling station. In this way, when a first capsule is inserted into another second capsule to be transported stacked by the centrifugal feeder, or if it is decided to stack them once used before being discarded, they are prevented from being coupled together, since the vertical ribs (8) act as a stop for the introduction of the second capsule, preventing it from reaching the bottom of the first one and being trapped.

Said vertical ribs (8) originate from the smaller base or bottom of the capsule and their free ends (11) preferably extend to a medium height of the capsule, so that the space available inside the capsule intended to contain ground coffee is not substantially reduced.

Contrary to what happened with the vertical ribs (8) of the capsule of the state of the art, the vertical ribs (8) of the present invention comprise a groove (10) at their free end (11) so that said end is not in contact with the internal wall of the body (1), but is separated by a gap. Taking into account the configuration described, when stacking the capsules, the stop contact with the free end (11) of the vertical ribs (8) is made in an area other than the body (1) - rib (8) junction area.

In this way, there is a movement of the junction of the vertical ribs (8) with the body (1) with respect to the prior art, which is moved towards an area closer to the smaller base instead of being carried out directly on the end free (11) of the vertical rib (8). This configuration allows the curvature or circularity of the body (1) of the capsule in the area of connection with the vertical ribs (8) not to be altered.

As can be seen in figure 4, the flange (2) comprises on its outer face - that is, the side to which the closing sheet (5) is adhered - a substantially flat surface (2c) coupled to the coffee machine. Likewise, on its inner face, opposite to the previously described outer face, the flange (2) comprises a protruding circumferential end (2b) and a circumferential toothing (2a) that provide said flange (2) with the rigidity and flexibility necessary for an optimal hermetic coupling to the machine in the distribution stage.

More specifically, with respect to the capsules found in the state of the art, the capsule of the present invention comprises a circumferential toothing (2a) where the serrated teeth have a greater total height to reduce front water leaks.

On the other hand, in order to increase the resistance of the flange (2), the protruding circumferential end (2b) is configured so that, if a longitudinal cut is made to the capsule as shown in figure 4, its outer wall is arranged in the direction normal to the support plane of the capsule (the same plane that comprises the closing sheet (5)). Finally, in Figure 2 a double perimeter projection (12) formed inside the capsule for merely constructive reasons can be observed, which facilitates the extraction of the body (1) of the capsule from the industrial mold during its shaping process by injection molding.

In view of this description and the set of figures, the person skilled in the art will understand that the embodiments of the invention that have been described can be combined in multiple ways within the object of the invention which is solely defined by the appended claims.

## Claims

1. Single-dose capsule for espresso coffee machines, made of injected biodegradable plastic material and featuring a body (1) with a generally curved frusto-conical shape comprising:
- a larger open base for loading the capsule with ground coffee, in turn comprising a flat surface flange (2) that is closed with a closing sheet (5) once the capsule is loaded; and
- a bottom or smaller base that in turn comprises a perimeter support foot (3) and a perforated central area (4), sunken towards the interior of the capsule, so that a hollow (9) is established between the perimeter support foot of the capsule and the central area (4), where said hollow (9) is hermetically closed with a sealing sheet (6),
wherein said perforated central area (4) additionally comprises a circumferential step (13) on which the sealing sheet (6) rests once it has been perforated by means existing in the coffee machine, **characterized in that** a plurality of vertical ribs (8) are formed on the inside side of the body (1) that originate from its smaller base and that comprise at their free end (11) a groove (10) adjacent to the body (1) of the capsule.

2. Single-dose capsule for espresso coffee machines, according to claim 1, **characterized in that** the flange (2), on its opposite face to which the closing sheet (5) is attached, comprises a protruding circumferential end (2b) that is arranged in the direction normal to the support plane of the capsule and which provides said flange (2) with the necessary rigidity for an optimal hermetic coupling to the espresso coffee machine according to claim 1 in the distribution stage.

## Patentansprüche

1. Einzeldosiskapsel für Espresso-Kaffeemaschinen, die aus einem eingespritzten biologisch abbaubaren Kunststoffmaterial hergestellt ist und einen Körper (1) mit einer grundsätzlich gekrümmten Kegelstumpfform aufweist, mit:
- einer größeren offenen Basis zum Beladen der Kapsel mit gemahlenem Kaffee, die ihrerseits einen flachen Oberflächenflansch (2) aufweist, der mit einer Verschlussfolie (5) verschlossen wird, sobald die Kapsel beladen ist; und
- einem Boden oder einer kleineren Basis, der/die seinerseits/ihrerseits einen umfänglichen Stützfuß (3) und einen perforierten zentralen Bereich (4) aufweist, der in Richtung des Inneren der Kapsel abgesenkt ist, sodass ein Hohlraum (9) zwischen dem umfänglichen Stützfuß der Kapsel und dem zentralen Bereich (4) gebildet ist, wobei der Hohlraum (9) mit einer Dichtungsfolie (6) hermetisch verschlossen ist,
wobei der perforierte zentrale Bereich (4) zusätzlich eine umfängliche Stufe (13) aufweist, auf welcher die Dichtungsfolie (6) aufliegt, sobald sie durch in der Kaffeemaschine vorhandene Mittel perforiert worden ist, **dadurch gekennzeichnet, dass** eine Vielzahl von vertikalen Rippen (8) an der Innenseite des Körpers (1) ausgebildet sind, die von seiner kleineren Basis ausgehen und die an ihrem freien Ende (11) eine Nut (10) aufweisen, die benachbart zu dem Körper (1) der Kapsel ist.

2. Einzeldosiskapsel für Espresso-Kaffeemaschinen nach Anspruch 1,
**dadurch gekennzeichnet, dass** der Flansch (2) an seiner gegenüberliegenden Fläche, an welcher die Verschlussfolie (5) angebracht ist, ein vorstehendes umfängliches Ende (2b) aufweist, das in der Richtung senkrecht zu der Stützebene der Kapsel angeordnet ist und welches den Flansch (2) mit der notwendigen Steifigkeit für eine optimale hermetische Kopplung mit der Espresso-Kaffeemaschine nach Anspruch 1 in der Verteilungsstufe versieht.

## Revendications

1. Capsule monodose pour des machines à café expresso, réalisée en matière plastique biodégradable injectée et présentant un corps (1) avec une forme tronconique généralement incurvée comprenant :
- une base ouverte plus grande pour le chargement de la capsule avec du café moulu, comprenant à son tour une bride (2) de surface plate qui est fermée avec une feuille de fermeture (5) une fois la capsule chargée ; et
- une base inférieure ou plus petite qui comprend à son tour un pied de support de périmètre (3) et une zone centrale (4) perforée, enfoncée vers l'intérieur de la capsule, de sorte qu'un creux (9) soit établi entre le pied de support de périmètre de la capsule et la zone centrale (4), où ledit creux (9) est hermétiquement fermé avec une feuille étanche (6),
dans laquelle ladite zone centrale perforée (4) comprend en outre un étage circonférentiel (13), sur lequel la feuille étanche (6) repose une fois qu'elle a été perforée par des moyens existant dans la machine à café, **caractérisée en ce qu'**une pluralité de nervures verticales (8) sont formées sur le côté intérieur du corps (1), lesquelles proviennent de sa base plus petite et comprennent à leur extrémité libre (11) une rainure (10) adjacente au corps (1) de la capsule.

2. Capsule monodose pour des machines à café expresse selon la revendication 1, **caractérisée en ce que** la bride (2), sur sa face opposée à laquelle la feuille de fermeture (5) est attachée, comprend une extrémité circonférentielle (2b) en saillie qui est agencée dans la direction orthogonale au plan de support de la capsule et qui dote ladite bride (2) de la rigidité nécessaire pour un couplage hermétique optimal avec la machine à café expresse selon la revendication 1 dans l'étape de distribution.
